# FASCICULE DE BREVET EUROPEEN

(11) **EP 1 055 493 B1**
(45) Date de publication et mention de la délivrance du brevet: **27.10.2004**
(21) Numéro de dépôt: 00105629.0
(22) Date de dépôt: 16.03.2000
(51) Int. Cl.: B26D 7/26

(54) **Dispositif de fixation et de guidage d'un palier sur un bati**
Vorrichtung zur Befestigung und Führung eines Lagers in Maschinenrahmen
Device for mounting and guiding a bearing in a machine stand

(30) Priorité: 28.04.1999 CH 78299
(43) Date de publication de la demande: 29.11.2000
(73) Titulaire: BOBST S.A., 1001 Lausanne (CH)
(72) Inventeur: Borel, Edouard, 1041 Dommartin (CH)
(74) Mandataire: Colomb, Claude

(56) Documents cités:
- EP-A- 0 611 187
- DE-A- 19 543 114
- JP-A- 6 033 938
- US-A- 4 934 838

## Description

La présente invention se rapporte à un dispositif de fixation et de guidage d'un palier sur un bâti comprenant deux montants parallèles, une coulisse ménagée entre eux pour recevoir le palier et des organes de fixation entre lesdits montants et ledit palier disposés à cheval entre les faces d'extrémités coplanaires desdits montants respectifs et dudit palier. Un tel dispositif est décrit dans la demande de brevet EP-A-0 611 187.

Ces paliers sont utilisés en particulier pour le pivotement des cylindres de découpage des découpeuses rotatives des machines pour confectionner les boîtes d'emballage pliantes à partir de carton en bande. Ces paliers sont soumis à des conditions sévères de vibrations et à de brusques variations de force dynamiques, de sorte qu'ils doivent être serrés et précontraints dans les trois axes pour garantir un comportement antivibratoire optimal.

De tels paliers ne doivent avoir qu'un seul degré de liberté, celui défini par la coulisse de guidage des deux faces latérales parallèles du palier en prise avec elle, de sorte que si, dans des circonstances tout à fait exceptionnelles, la pression exercée sur le palier dépasse un certain seuil, le palier ne peut se déplacer que dans cette direction, permettant d'augmenter l'écartement entre les cylindres de travail.

Etant donné que le découpage ne peut être obtenu que pour un écartement d'une précision micrométrique entre les cylindres et que cet écartement doit pouvoir être ajusté périodiquement pour tenir compte de l'usure des outils de coupe ainsi que des conditions de travail particulières, les paliers des deux cylindres sont séparés par des cales d'épaisseur variable.

Il est donc nécessaire de pouvoir écarter le cylindre supérieur du cylindre inférieur de quelques dixièmes de mm pour dégager les cales, tout en garantissant une remise en place après échange des cales avec une précision conforme aux exigences susmentionnées et avec un minimum d'effort.

En cas d'accident, qui est généralement provoqué par un bourrage de carton entre les cylindres de découpage, les paliers du cylindre supérieur doivent pouvoir se déplacer le long de la coulisse dans laquelle ils sont guidés, afin de préserver les roulements et les cylindres de découpage.

A cet effet, le palier est immobilisé dans la coulisse par une vis de pression vissée dans un joug fixé au sommet des deux montants entre lesquels est formée la coulisse de guidage du palier. Ce joug qui sert aussi à appliquer les montants contre les faces latérales du palier, est vissé aux extrémités de ces montants par des vis calibrées pouvant s'allonger par fluage ou casser au-delà d'une pression déterminée exercée sur le palier, ces vis jouant donc le même rôle qu'un fusible dans un circuit électrique.

La fixation du palier du cylindre inférieur est réalisée par des organes plats rectangulaires disposés à cheval le long des deux bords de la coulisse de guidage et vissés à ses quatre coins, au palier et au montant adjacent. Une telle fixation ne donne aucun degré de liberté, de sorte qu'elle n'est pas utilisable pour la fixation des paliers du cylindre supérieur, si l'on veut bénéficier de la sécurité susmentionnée en cas de bourrage. Par ailleurs, une telle fixation ne permet pas le changement de l'épaisseur des cales.

Par conséquent, le problème posé par la fixation des paliers du cylindre supérieur est complexe et fait actuellement l'objet de solutions ayant recours à des systèmes de guidages complexes, onéreux et posant des problèmes liés à la poussière et aux pressions élevées qu'ils sont appelés à supporter.

Le but de la présente invention est de remédier, au moins en partie, aux inconvénients susmentionnés.

A cet effet, cette invention a pour objet un dispositif de fixation et de guidage d'un palier sur un bâti, selon la revendication 1.

L'organe de fixation est une pièce simple à fabriquer, n'exigeant pas une grande précision à l'exception de sa face d'appui qui doit simplement être planée pour garantir son contact avec les surfaces d'extrémités du palier et du montant adjacent.

Cet organe de fixation permet de ne laisser au palier qu'un seul degré de liberté dans le sens de la coulisse. Ce degré de liberté sert à permettre de déplacer le palier vers le haut de quelques dixièmes de mm lors du changement des cales et ce léger déplacement tend à écarter les montants et donc à réduire leurs pressions sur les paliers, facilitant son dégagement.

En cas de déplacement plus important du palier, suite à un bourrage par exemple, les lames de suspension tendent tout d'abord à écarter les montants du palier, puis elles flambent et fluent en même temps que les vis de fixation du joug reliant les extrémités supérieures des deux montants. Ce déplacement est de préférence limité par l'écartement des fentes séparant les pattes de fixation.

L'organe de fixation selon l'invention peut être vissé en place sans précaution particulière après la mise en place précise du palier dans la coulisse et serrage du joug. De ce fait, tout déplacement du palier dans les limites de déformation élastique des lames de suspension, permet une remise en place extrêmement fidèle et facile du palier après échange des cales, étant donné que les lames de suspension déformées élastiquement reprennent normalement leur forme initiale en appliquant le palier contre les nouvelles cales.

Un autre avantage du dispositif de fixation objet de l'invention est la rigidité horizontale maximale conférée au palier en comparaison de tout autre moyen connu. C'est ainsi que si l'on devait intercaler des éléments à aiguilles entre la coulisse et le palier, la rigidité s'en trouverait fortement réduite.

Le dessin annexé illustre, schématiquement et à titre d'exemple, une forme d'exécution du dispositif de fixation d'un palier, objet de la présente invention.
La figure 1 est une vue en élévation de la face latérale externe d'un module de pivotement de deux cylindres de travail d'une découpeuse rotative pour boîtes pliantes;
la figure 2 est une vue partielle agrandie de la figure 1.

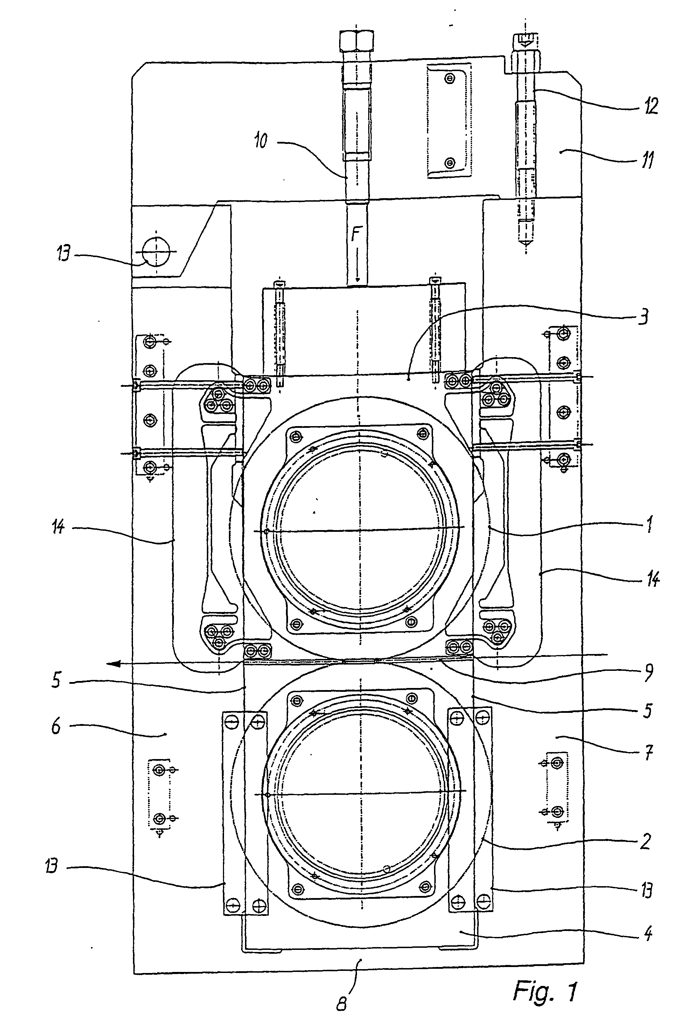

Le module de pivotement de deux cylindres de découpage de carton en bande, illustré par la figure 1, montre une application typique pour laquelle le dispositif de fixation objet de la présente invention a été conçu.

Ce module comporte deux cylindres superposés 1, 2, montés à leurs deux extrémités respectives dans des paliers 3, 4, seuls deux de ces paliers, situés à une des extrémités respectives de ces cylindres 1, 2 étant visibles sur cette figure. Ces paliers 3, 4 présentent une forme extérieure rectangulaire, dont deux côtés parallèles sont engagés dans une coulisse 5 formée entre les bords internes de deux montants parallèles 6, 7 d'un bâti 8.

L'écartement entre ces deux paliers 3, 4 est réglé avec une précision micrométrique à l'aide de cales 9, destinées à déterminer les positions relatives des deux cylindres 1, 2 et, par conséquent, le degré de pénétration des outils de découpage ou de refoulage dans la bande de carton qui passe entre eux.

Ces deux paliers 3, 4 sont maintenus dans la coulisse 5 par une vis 10 qui exerce une pression F sur une face transversale du palier supérieur 3. Cette vis 10 est vissée dans un joug 11, lui-même fixé aux extrémités des montants 6 et 7 par une vis 12 et un arbre d'articulation 13 ou par deux vis vissées aux deux extrémités des montants respectifs 6, 7. La vis 12 est calibrée pour résister à une force de traction limite, choisie en fonction de la pression maximum admissible exercée sur le palier 3 dans le sens opposé à la force F, de manière à se déformer non élastiquement ou à casser au-delà de cette limite.

Certains moyens connus non représentés, étant donné qu'ils ne font pas directement partie de la présente invention, permettent de transformer une partie de la force F exercée par la vis 10 en forces tendant à rapprocher les montants 6, 7 l'un de l'autre pour appliquer les bords de la coulisse 5 contre les paliers 3, 4.

Deux organes de fixation 14 sont disposés le long des deux bords de la coulisse 5 et chevauchent les faces d'extrémités du palier 3 et des montants adjacents respectifs 6, 7.

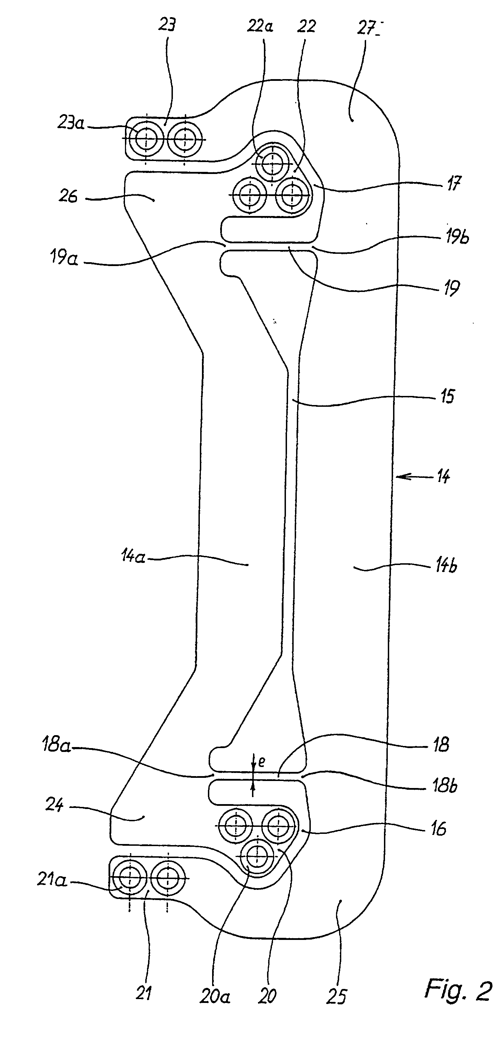

La figure 2 montre un de ces organes de fixation 14 à plus grande échelle. Cet organe 14 est formé à partir d'une plaque d'acier allongée relativement épaisse, de manière à former des éléments de butée pour empêcher le déplacement du palier 3 par rapport au bâti 8, selon l'axe de rotation du cylindre 1, comme on l'expliquera ci-dessous.

Cet organe de fixation 14 est traversé par une ouverture fermée allongée 15 qui s'élargit à ses deux extrémités. Cette ouverture allongée 15 divise longitudinalement l'organe de fixation 14 en deux parties, une partie interne 14a, située du côté du palier 3 et une partie externe 14b, située du côté opposé. Elle est encore traversée par deux autres ouvertures 16, 17, formées par des fentes ouvertes à une de leurs extrémités. La forme de ces fentes 16, 17 est choisie pour ménager d'une part, avec chaque extrémité de l'ouverture fermée 15, une lame de suspension 18, 19 orientée perpendiculairement à la coulisse 5 et d'autre part, deux pattes de fixation 20, 21, respectivement 22, 23 de part et d'autre de chaque fente 16, 17. Ces pattes de fixation 20-23 présentent chacune un certain nombre de trous 20a-23a destinés à recevoir des vis de fixation (non représentées).

La patte 20 est reliée par un bras 24 à l'une des extrémités 18a de la lame de suspension 18, tandis que la patte 21 est reliée par un bras 25 à l'autre extrémité 18b de cette même lame 18. De manière symétrique, la patte 22 est reliée par un bras 26 à l'une des extrémités 19a de la lame de suspension 19, tandis que la patte 23 est reliée par un bras 27 à l'autre extrémité 19b de cette lame 19.

Comme le montre la figure 2, les pattes 20 et 22 et leurs bras de liaison respectifs 24, 26 sont solidaires de la partie interne 14a de l'organe de fixation 14, mais elles sont fixées dans le montant 7 qui est à l'extérieur par rapport au palier 3. Au contraire, les pattes 21 et 23 et leurs bras respectifs 25 et 27 sont solidaires de la partie externe 14b de l'organe de fixation 14, mais sont fixées dans le palier 3 qui est à l'intérieur des montants 6 et 7.

Par conséquent, les quatre bras de liaison 24-27 chevauchent chacun les surfaces d'extrémités du montant 7 et du palier 3. De ce fait, les deux bras 25 et 27 empêchent tout déplacement axial du palier 3 dirigé vers l'intérieur du bâti 8 dont on voit la face externe sur les figures 1 et 2, tandis que les bras 24 et 26 empêchent tout déplacement axial de ce palier 3 dirigé vers l'extérieur de ce bâti 8.

Pour leur part, les lames de suspension 18 et 19 empêchent tout déplacement du palier perpendiculairement à la coulisse 5 dans un sens ou dans l'autre. Ainsi, cet organe de fixation 14 ne laisse au palier 3 qu'un seul degré de liberté dans le sens vertical. L'épaisseur de l'organe de fixation est très sensiblement supérieure à l'épaisseur e des lames de suspension 18 et 19. A titre d'exemple, l'organe de fixation peut avoir typiquement entre 10 et 50mm d'épaisseur. Le rapport entre la longueur et l'épaisseur e des lames 18, 19 est typiquement de 1 à 10 et est fonction de l'importance de la flexion élastique désirée. Cette épaisseur peut varier environ de 0,5mm à 8mm.

Etant donné que les vis servant à fixer les pattes de fixation 20-23 ne permettent pas de donner un positionnement précis, leur fixation sera effectuée après le serrage des vis 10 et 12, une fois que le palier 3 est parfaitement positionné contre les cales 9. Le serrage de la vis 12 fixant le joug 11 et de la vis 10 serrant le palier 3 dans la coulisse 5 permet de régler de manière précise la position du palier 3 en assurant un contact parfait contre les cales 9. Une fois que cette position est ainsi définie, les vis des pattes de fixation 20-23 sont serrées, de sorte que les positions de serrage respectives des pattes de fixation 20-23 correspondent à la position de référence du palier 3.

Par conséquent, si les cales 9 doivent être changées en raison de l'usure des outils de coupe des cylindres 1, 2 par exemple, il suffit de desserrer les vis 10. Le palier 3 peut alors être soulevé dans la coulisse 5 de quelques dixièmes de mm, dans la limite de la déformation élastique des lames 18 et 19. Lors de ce soulèvement, si l'on considère la lame 18, l'extrémité 18b pivote autour d'un point correspondant à l'extrémité 18a. Ce pivotement est accompagné d'un très petit écartement des montants 6 et 7. Etant donné la position symétrique des pattes 20, 21 par rapport aux pattes 22, 23, la trajectoire du palier 3 au cours de ce déplacement est verticale, c'est-à-dire qu'elle suit la coulisse 5.

Après avoir remplacé les cales 9 en fonction du nouvel écartement désiré entre les cylindres 1 et 2, les lames 18, 19 reviennent, ou tendent à revenir dans leur position initiale de référence. Si les nouvelles cales sont plus épaisses que celles qu'elles ont remplacées, les lames 18, 19 conserveront une très légère déformation élastique. Si au contraire, les nouvelles cales sont plus minces pour tenir compte de l'usure ou de conditions de travail particulières, les lames 18, 19 sont légèrement forcées vers le bas par le poids de l'outil 1, jusqu'à ce que le palier 3 soit en contact avec les nouvelles cales 9. Un déplacement fin supplémentaire se produit lors du serrage de la vis 10. Il est évident que ces différences d'épaisseur des cales 9 sont tout au plus de l'ordre de quelques centièmes de mm, de sorte qu'elles n'ont pas de répercussion sur la géométrie de l'ensemble.

En cas d'anomalie de fonctionnement susceptible d'engendrer un déplacement plus important du palier 3, les lames 18, 19 vont d'abord pivoter comme précédemment en tendant à écarter les .montants 6 et 7 du palier 3, puis elles vont flamber en fluant. La course sera limitée par l'écartement de la portion des fentes 16 et 17 qui s'étend transversalement à la coulisse 5 dans laquelle le palier 3 est guidé. Simultanément, la ou les vis 12 s'allongeront ou casseront. Ces vis 12 et les organes de fixation 14 devront alors être changés, mais les partie vitales, c'est-à-dire les paliers 3, 4 et les cylindres 1, 2 auront été épargnés.

## Revendications

1. Dispositif de fixation et de guidage d'un palier (3) sur un bâti (8) comprenant deux montants parallèles (6, 7), une coulisse (5) ménagée entre eux pour recevoir le palier (3) et des organes de fixation (14) entre lesdits montants et ledit palier disposés à cheval entre les faces d'extrémités coplanaires desdits montants respectifs (6, 7) et dudit palier (3), **caractérisé en ce que** trois découpes (15, 16, 17) traversent chaque organe de fixation (14) et forment respectivement une ouverture fermée (15), allongée dans le sens de ladite coulisse (5) et deux fentes (16, 17) dont une des extrémités respectives est ouverte, disposées aux deux extrémités respectives de ladite ouverture fermée (15) séparant une partie interne (14a) et une partie externe (14b) de l'organe de fixation (14), les parties interne (14a) et externe (14b) étant isotropiquement rigides pour assurer la position des parties interne (14a) et externe (14b) par rapport aux points de fixation des pattes (20 à 23) sur les montants (6, 7); deux lames (18, 19) de suspension et de positionnement, sensiblement perpendiculaires audits montants (6, 7), séparant cette ouverture allongée (15) desdites fentes (16, 17) respectives, deux pattes de fixation (20, 21; 22, 23) étant formées de part et d'autre de chaque fente (16, 17), l'une (20; 22) étant fixée audit montant (6; 7) et l'autre (21; 23) audit palier (3), les deux pattes (20, 21; 22, 23) adjacentes à une fente commune (16, 17) étant reliées respectivement aux deux extrémités (18a, 18b; 19a, 19b) des lames (18; 19) de suspension et de positionnement respectives, par deux bras respectifs (24, 25; 26, 27) rigides par rapport à ces lames (18; 19) de suspension et de positionnement.

2. Dispositif selon la revendication 1, **caractérisé en ce que** les pattes (20, 22) fixées au montant (6, 7) sont reliées aux extrémités (18a, 19a) desdites lames (18, 19) de suspension et de positionnement respectives les plus proches dudit palier (3) et les pattes (21, 23) fixées au palier (3) sont reliées aux extrémités (18b, 19b) de ces lames (18, 19) de suspension et de positionnement respectives les plus éloignées de ce palier (3).

3. Dispositif selon l'une des revendications précédentes, **caractérisé en ce que** l'épaisseur dudit organe de fixation (14) est sensiblement supérieure à l'épaisseur (e) desdites lames (18, 19) de suspension et de positionnement.

4. Dispositif selon l'une des revendications précédentes, **caractérisé en ce que** le rapport entre la longueur et l'épaisseur (e) desdites lames (18, 19) est de l'ordre de 1 à 10.

5. Dispositif selon l'une des revendications précédentes, **caractérisé en ce que** ladite ouverture allongée (15) divise ledit organe de fixation (14) en deux parties (14a, 14b) interne et externe, chacune d'elles se terminant par deux des bras de liaison (24, 26; 25, 27) des pattes (20, 22; 21, 23) respectives de fixation aux lames (18, 19) de suspension et de positionnement respectives, les deux bras de liaison (25, 27) terminant la partie externe (14b) s'étendent vers l'intérieur, tandis que les deux bras de liaison (24, 26) terminant la partie interne (14a) s'étendent vers l'extérieur et sont disposés entre les bras de liaison (25, 27) de ladite partie externe (14b) et lesdites lames (18, 19) de suspension et de positionnement respectives.

6. Dispositif selon l'une des revendications précédentes, **caractérisé en ce que** chaque bras de liaison (24-27) reliant une desdites pattes (20-23) à une lame (18, 19) de suspension, s'étend sur une portion de la face d'extrémité de la pièce adjacente, montant (6, 7) ou palier (3) à laquelle ladite patte (20-23) est fixée, s'opposant ainsi au déplacement dudit palier (3) dans les deux sens dans la direction de son axe de rotation.

7. Dispositif selon l'une des revendications précédentes, **caractérisé en ce qu'**au moins une portion de chacune desdites fentes (16, 17) s'étend dans une direction transversale à ladite coulisse (5) de sorte que l'écartement de cette portion transversale de ces fentes (16, 17) limite l'amplitude de la course susceptible d'être parcourue par ledit palier (3).

## Patentansprüche

1. Vorrichtung zur Befestigung und Führung eines Lagers (3) auf einem Rahmen (8), umfassend zwei parallele Stützen (6, 7), eine zwischen ihnen eingerichtete Schiene (5) zur Aufnahme des Lagers (3) sowie Befestigungsorgane (14) zwischen den besagten Stützen und dem besagten Lager, welche die koplanaren Endflächen der besagten Stützen (6, 7) und des besagten Lagers (3) überspannen, **dadurch gekennzeichnet, dass** drei Zuschnitte (15, 16, 17) jedes Befestigungsorgan (14) durchqueren und beziehungsweise eine geschlossene Längsöffnung (15), die sich in der Richtung der besagten Schiene (5) erstreckt, sowie zwei Schlitze (16, 17) bilden, wobei Letztere je ein geöffnetes Ende aufweisen und an den Enden der besagten geschlossenen Längsöffnung (15) angeordnet sind und das Befestigungsorgan (14) in einen interen Teil (14a) und einen externen Teil (14b) teilen, wobei der interne (14a) und der externe Teil (14b) isotropisch steif sind, um die Position des internen (14a) und des externen Teils (14b) in bezug auf die Befestigungspunkte der Laschen (20 bis 23) auf den Stützen (6, 7) sicherzustellen; zwei Hänge- und Positionierbiätter (18, 19), sozusagen senkrecht zu den besagten Stützen (6, 7), trennen diese Längsöffnung (15) von den besagten Schlitzen (16, 17), zwei Befestigungslaschen (20, 21; 22, 23) sind beiderseits von jedem Schlitz (16, 17) angeordnet, wovon eine (20; 22) an der besagten Stütze (6; 7) und die andere (21; 23) am besagten Lager (3) befestigt sind, wobei die zwei an einen gemeinsamen Schlitz (16, 17) angrenzenden Laschen (20, 21; 22, 23) jeweils mit den zwei Enden (18a, 18b; 19a, 19b) der Hänge- und Positionierblätter verbunden sind durch zwei Arme (24, 25; 26, 27), die in bezug auf diese Hänge- und Positionierblätter (18; 19) steif sind.

2. Vorrichtung gemäss Patentanspruch 1, **dadurch gekennzeichnet, dass** die an der Stütze (6, 7) befestigten Laschen (20, 22) mit den am nächsten beim Lager (3) befindlichen Enden (18a, 19a) der Hänge- und Positionierblätter (18, 19), und die am Lager (3) befestigten Laschen (21, 23) mit den am weitesten von diesem Lager (3) enfernten Enden (18b, 19b) dieser Hänge- und Positionierblätter (18, 19) verbunden sind.

3. Vorrichtung gemäss einem der vorhergehenden Patentansprüche, **dadurch gekennzeichnet, dass** die Dicke des Befestigungsorgans (14) wesentlich grösser ist als die Dicke (e) der Hänge- und Positionierblätter (18, 19).

4. Vorrichtung gemäss einem der vorhergehenden Patentansprüche, **dadurch gekennzeichnet, dass** das Verhältnis zwischen der Länge und der Dicke (e) der Blätter (18, 19) in der Grössenordnung von 1 zu 10 ist.

5. Vorrichtung gemäss einem der vorhergehenden Patentansprüche, **dadurch gekennzeichnet, dass** die Längsöffnung (15) das Befestigungsorgan (14) in einen internen (14a) und einen externe Teil (14b) teilt, die je in zwei Verbindungsarme (24, 26; 25, 27) der Befestigungslaschen (20, 22; 21, 23) mit den Hänge- und Positionierblätter (18, 19) enden, wobei sich die zwei den externen Teil (14b) endenden Verbindungsarme (25, 27) nach innen erstrecken, während sich die zwei den internen Teil (14a) endenden Verbindungsarme (24, 26) nach aussen erstrecken und zwischen den Verbindungsarmen (25, 27) des besagten externen Teils (14b) und den besagten Hänge- und Positionierblättern (18, 19) angeordnet sind.

6. Vorrichtung gemäss einem der vorhergehenden Patentansprüche, **dadurch gekennzeichnet, dass** sich jeder Verbindungsarm (24-27) einer der Laschen (20-23) mit einem Hängeblatt (18, 19) auf einem Stück der Endfläche des angrenzenden Teils erstreckt, Stütze (6, 7) oder Lager (3), an welchem die besagte Lasche (20-23) befestigt ist, und sich so der Verschiebung des besagten Lagers (3) in beiden Richtungen seiner Rotationsachse widersetzt.

7. Vorrichtung gemäss einem der vorhergehenden Patentansprüche, **dadurch gekennzeichnet, dass** sich mindestens ein Stück von jedem Schlitz (16, 17) quer zur Schiene (5) erstreckt, so dass der Abstand dieses Querstücks dieser Schlitze (16, 17) den Umfang der Strecke, welche vom Lager (3) zurückgelegt werden könnte, begrenzt.

## Claims

1. A system for fixing and guiding a bearing (3) on a frame (8) comprising two parallel uprights (6, 7), a slot (5) formed between them to receive the bearing (3) and fixing members (14) between said uprights and said bearing disposed straddle-fashion between the coplanar end faces of said respective uprights (6, 7) and of the bearing (3), **characterised in that** three cut-outs (15, 16, 17) extend through each fixing member (14) and respectively form a closed opening (15) elongate in the direction of said slot (5) and two slots (16, 17) one of the respective ends of which is open, disposed at the respective two ends of the said closed opening (15) separating an inner part (14a) and an outer part (14b) of the fixing member (14), the inner part (14a) and outer part (14b) being isotropically rigid to ensure the position of the inner part (14a) and outer part (14b) with respect to the fixing points of the lugs (20 - 23) on the uprights (6, 7); two suspension and positioning strips (18, 19) substantially perpendicular to the said uprights (6, 7) separating the said elongate opening from the said respective slots (16, 17), two fixing lugs (20, 21; 22, 23) being formed on either side of each slot (16, 17), one (20; 22) being fixed to the said upright (6; 7) and the other (21; 23) to the said bearing (3), the two lugs (20, 21; 22, 23) adjacent a common slot (16, 17) being respectively connected to the two ends (18a, 18b; 19a, 19b) of the respective suspension and positioning strips (18; 19) by two respective arms (24, 25; 26, 27) which are rigid with respect to said suspension and positioning strips (18; 19).

2. A system according to claim 1, **characterised in that** the lugs (20, 22) fixed to the uprights (6, 7) are connected to the ends (18a; 19a) of said respective suspension and positioning strips (18, 19) closest to the said bearing (3) and the lugs (21, 23) fixed to the bearing (3) are connected to the ends (18b, 19b) of said respective suspension and positioning strips (18, 19) furthest away from said bearing (3).

3. A system according to any one of the preceding claims, **characterised in that** the thickness of said fixing member (14) is substantially greater than the thickness (e) of said suspension and positioning strips (18, 19).

4. A system according to any one of the preceding claims, **characterised in that** the ratio between the length and thickness (e) of said strips (18, 19) is of the order of 1 to 10.

5. A system according to any one of the preceding claims, **characterised in that** the said elongate opening (15) divides the said fixing member (14) into two parts (14a, 14b), an inner part and an outer part, each terminating in two of the arms (24, 26; 25, 27) connecting the respective fixing lugs (20, 22; 21, 23) to the respective suspension and positioning strips (18, 19), the two connecting arms (25, 27) terminating the outer part (14b) extend inwardly while the two connecting arms (24, 26) terminating the inner part (14a) extend outwardly and are disposed between the connecting arms (25, 27) of the said outer part (14b) and the said respective suspension and positioning strips (18, 19).

6. A system according to any one of the preceding claims, **characterised in that** each connecting arm (24 - 27) connecting one of said lugs (20 - 23) to a suspension strip (18, 19) extends over a portion of the end face of the adjacent part, upright (6, 7) or bearing (3) to which said lug (20 - 23) is fixed, thus opposing the movement of the said bearing (3) in the two senses in the direction of its axis of rotation.

7. A system according to any one of the preceding claims, **characterised in that** at least one portion of each of said slots (16, 17) extends in a transverse direction to the said slot (5) so that the spacing of said transverse portion of said slots (16, 17) limits the amplitude of the travel that can be covered by said bearing (3).
